Europäisches Patentamt

European Patent Office

Office européen des brevets

(11) Veröffentlichungsnummer: **0 222 040**
A2

## (12) EUROPÄISCHE PATENTANMELDUNG

(21) Anmeldenummer: 85114461.8

(22) Anmeldetag: 14.11.85

(51) Int. Cl.⁴: **F 24 D 3/00**

(30) Priorität: 11.11.85 DE 3539926

(43) Veröffentlichungstag der Anmeldung:
20.05.87 Patentblatt 87/21

(84) Benannte Vertragsstaaten:
AT BE CH DE FR GB IT LI NL SE

(71) Anmelder: IWK Regler und Kompensatoren GmbH
Singerstrasse
D-7513 Stutensee(DE)

(72) Erfinder: Mall, Horst
Rechts der Alb 19
D-7500 Karlsruhe(DE)

(74) Vertreter: Lempert, Jost, Dr.rer.nat.
Patentanwälte Dr. Ing. Hans Lichti Dipl.-Ing. Heiner Lichti
Dipl.-Phys. Dr.rer.nat. Jost Lempert Durlacher Strasse 31
Postfach 410760
D-7500 Karlsruhe 41(DE)

(54) Heizungstechnische Anlage.

(57) Eine heizungstechnische Anlage (1) zur Versorgung der Heizung und des Brauchwassers mit Fernwärme ist kostengünstig und platzsparend ausgebildet durch zwei hintereinander geschaltete Wärmeaustauscher (8, 16) die mit einem dazwischenliegenden Zwischenteil (9) und einem vorgeschalteten, an das Fernleitungsnetz (6, 7) angeschlossenen Primärblock (4) eine Einheit bilden, und einer Steuer- und Regeleinheit (2), wobei der Sekundärkreis (44) des ersten Wärmeaustauschers (8) sowohl den Heizungskreislauf (12) als auch den Primärkreis (45) für den zweiten, der Brauchwassererwärmung dienenden Wärmeaustauscher (16) bildet, das Zwischenteil (9) die Steuer- und Regelorgane für die Heiz- und Brauchwasser-temperaturregelung aufweist und der Primärblock (4) alle fernleitungsseitigen Überwachungseinheiten (23) wie z.B. Meß- und Regelorgane oder dgl. enthält

FIG. 1

EP 0 222 040 A2

I W K Regler und Kompensatoren GmbH
D-7513 Stutensee


Heizungstechnische Anlage

- - - - - -


Die Erfindung betrifft eine heizungstechnische Anlage zur Versorgung der Heizung und des Brauchwassers mit Fernwärme.

Fernwärme wird in Haushalten im allgemeinen zur Gebäudeheizung verwendet. Zur Energieübertragung an das örtliche Heizungssystem ist ein Wärmeaustauscher vorgesehen, der zudem das Fernwärmenetz vom Heizungskreislauf abkoppelt. Daneben sind noch Meß-, Regel- und Überwachungsgeräte installiert, die einen reibungslosen Betrieb der Heizung gewährleisten. Trotz Anschlusses und Verwendung der Fernwärme für die Gebäudeheizung werden für die Brauchwassererwärmung häufig noch Elektroboiler, Gasdurchlauferhitzer oder dgl. eingesetzt. Dies ist jedoch unwirtschaftlich, da neben den hohen Installations- und Anschaffungskosten auch die laufenden Betriebskosten sehr hoch sind. Dieser Nachteil kann dadurch behoben werden, daß die Erwärmung des Brauchwassers ebenfalls über das Fernwärmenetz erfolgt. Dies hat zudem den Vorteil, daß das Fernwärmenetz stärker ausgelastet ist, d. h. die Wärmeverbrauchsdichte größer ist, und dadurch die Verbrauchskosten in Relation zur Wärmemenge erheblich sinken. Die Erwärmung des Brauchwassers über die Fernwärme erfordert jedoch einen weiteren Anschluß an das Fernwärmenetz und einen zusätzlichen Wärmeaustauscher.

p

Neben diesem Wärmeaustauscher müßten zusätzlich, wie beim Wärmeaustauscher der Gebäudeheizung, die Meß- und Überwachungsgeräte wie z. B. Wärmezähler, Schmutzfänger, Regelventil usw. vorhanden sein. Dieser weitere Anschluß an das Fernwärmenetz ist mit einem erheblichen finanziellen und materiellen Aufwand verbunden.

Der Erfindung liegt deshalb die Aufgabe zugrunde, eine kostengünstige, platzsparende Heizungseinheit für die Raumheizung und Brauchwassererwärmung bereitzustellen.

Diese Aufgabe wird erfindungsgemäß gelöst durch zwei hintereinander geschaltete gleichartige Wärmeaustauscher mit einem dazwischen liegenden Zwischenteil, wobei der Sekundärkreis des ersten Wärmeaustauschers sowohl im Heizungskreislauf liegt als auch den Primärkreis für den zweiten, der Brauchwassererwärmung dienenden Wärmeaustauscher bildet.

Die Anlage besteht aus zwei Wärmeaustauschern einem Primärblock und einem Zwischenteil. Wärmeaustauscher ist mit dem Fernwärmenetz verbunden und entnimmt diesem die benötigte Wärmemenge. Der Sekundärkreis dieses ersten Wärmeaustauschers überträgt diese Wärmemenge entweder in den Heizungskreislauf der Gebäudeheizung oder in den Primärkreis des zweiten Wärmeaustauschers, für das sie der Brauchwassererwärmung dient. Zwischen dem ersten und zweiten Wärmeaustauscher ist ein Zwischenteil angeordnet, das die beiden Wärmeaustauscher hydraulisch verbindet. Demnach benötigt die ganze Anlage lediglich einen Anschluß für den Vor- und Rücklauf des Fernleitungsnetzes, weshalb die Anlage sehr einfach, schnell und preisgünstig zu installieren ist.

Mit Vorteil weist das Zwischenteil Steuer- und Regelorgane für die Heiz- und Brauchwassertemperaturregelung
auf. In diesem Zwischenteil wird der Sekundärkreis des
ersten Wärmeaustauschers entweder in den Heizungskreislauf oder in den Primärkreis des zweiten Wärmeaustauschers
umgeschaltet. Die dafür notwendigen Steuer- und Regelorgane sind innerhalb dieses Zwischenteils untergebracht, so daß mit den hydraulischen Wegen für das
Wärmetransportmedium  das Zwischenteil sich als kompaktes und platzsparendes Teilstück der Anlage erweist.

Eine weitere Vereinfachung der Anlage und deren Installation wird dadurch erreicht, daß dem ersten Wärmeaustauscher ein an das Fernleitungsnetz angeschlossener
Primärblock vorgeschaltet ist, und der Primärblock alle
fernleitungsseitigen Überwachungseinheiten, wie z. B.
Meß- und Regelorgane oder dgl. enthält. Somit sind auch
die zur Überwachung der Anlage dienenden Meß- und Regelorgane, was in der Regel Differenzdruck und Volumenstromregler, Wärmemengenmeßgerät z. B. nach dem Ultraschall-Meßprinzip, Filtereinsatz und dgl. ebenfalls in
der Anlage untergebracht, und müssen deshalb nicht extra
installiert werden.

Vorteilhaft ist diese Anlage als kompakte Einheit und
daher platzsparend ausgebildet. Außerdem sind alle Meß-
und Regelorgane nur einmal vorhanden, was sich ebenfalls kostengünstig auswirkt. Die Steuerung der Anlage
übernimmt eine Steuer- und Regeleinheit, die mit den
Meß- und Regelorganen der Anlage verbunden ist.

Durch den Wärmeverbund der Heizung und des Brauchwassers ist der absolute Wärmeverbrauch höher, als
wenn lediglich die Heizung über die Fernwärme versorgt
werden würde. Dadurch wird die Anlage auch für "Kleinverbraucher" im Gegensatz zu "Großverbrauchern", wie
z. B. Hochhäusern oder dgl., interessant, da die relativen Umbau- und Anschlußkosten sinken. Diese Anlage kann sowohl für einen geringen als auch für einen hohen Wärmeumsatz ausgelegt werden, d. h. sie ist für "Kleinverbraucher" mit geringem Wärmebedarf und "Großverbraucher" mit hohen Wärmebedarf auslegbar.

Vorteilhaft besteht das Zwischenteil und der Primärblock je aus einem Gußteil mit gegossenén Kanälen als hydraulische Wege. Das Gußteil, entsprechend der EP-A-0 092 032, das aus Grauguß, Stáhlguß, Kunststoff oder dgl. besteht, kann einfach und preisgünstig hergestellt werden. Auf diese Weise können sowohl der Primärblock als auch das Zwischenteil sehr kompakt und platzsparend ausgebildet werden, da sie aus wenigen Einzelteilen erstellt und vorteilhafterweise in einem Block gegossen werden, wobei in der matrixförmigen Anordnung dann schon sämtliche erforderlichen Verbindungsleitungen sowie Bypaßleitungen, Sicherheitsleitungen etc. vorgesehen sind. Dadurch, daß separate Verbindungselemente, wie z. B. Winkel-Abzweig- und Kreuzungselemente wegfallen, da sie ebenfalls in dem Gußblockteil integriert sind, ist eine erhebliche Volumen- und Gewichtseinsparung bei gleicher Druckbeständigkeit möglich.

Vorteilhaft sind das Zwischenteil und der Primärblock an die Wärmetauscher bzw. an das Fernleitungsnetz anschraub- bzw. anflanschbar. Dies ermöglicht eine schnelle Montage vor Ort, ohne daß auf schweiß- und löttechnische Verbindungen zurückgegriffen werden muß.

Eine weitere Vereinfachung der Anlage wird dadurch erreicht, daß der Primärblock nur ein Motorstellventil aufweist, das sowohl zur Regelung der Heizungs- als auch zur Regelung der Brauchwassertemperatur dient. Dieses Motorstellventil, das unter anderem von der Steuer- und Regeleinheit angesteuert wird, steuert den Zulauf in den Primärkreis des ersten Wärmeaustauschers, so daß in diesem exakt nur die Wärmemenge ausgetauscht wird, die entweder von der Heizung oder dem Brauchwasser benötigt wird. Dieses den Vorlauf des Fernwärmemediums steuernde Motorstellventil bewirkt neben der Brauchwassertemperaturregelung auch die witterungsgeführte Heizungsregelung.

Mit Vorteil ist der Sekundärkreis des ersten Wärmeaustauschers über einen Doppelregler zum Heizungskreislauf bzw. zum Primärkreis des zweiten Wärmeaustauschers umschaltbar und wird durch ein Steuerelement, wie z. B. Strömungswächter, Differenzdruckschalter, Temperaturschalter oder dgl. angesteuert. Weiterhin zeichnet sich das Zwischenteil dadurch aus, daß eine Brauchwasserpumpe zur Umwälzung des Sekundärkreises des ersten Wärmeaustauschers während der Brauchwassererwärmung vorgesehen ist, und diese nach Beendigung der Brauchwassererwärmung zum Temperaturabbau im Zwischenteil gegebenenfalls nachläuft. Die im ersten Wärmeaustauscher auf dessen Sekundärkreis übertragene Wärmemenge wird demnach entweder zu Heizzwecken oder zur Erwärmung des Brauchwassers verwendet. Das Temperaturniveau bei Heizbetrieb ist ein anderes als beim Brauchwasserbetrieb. Der Brauchwasserbereiter soll so tief gefahren werden, daß Kalkausfällung verhindert wird. Der Doppelregler schaltet lediglich die Pumpen und die Betriebsart hinsichtlich Heizbetrieb bzw. Brauchwasserbetrieb fest, die Rückschlagorgane verhindern, daß falsche Strömungen entstehen und gewährleisten mit der Pumpenschaltung den Brauchwasservorrangbetrieb.

Dabei wird die Gebäudeheizung abgeschaltet und der Brauchwasserbereitung den Vorrang gegeben. In diesem Schaltungszustand ruht ebenfalls die Heizungspumpe, wohingegen die Brauchwasserpumpe anläuft. Ein hydraulischer Kurzschluß wird durch die entsprechend gesteuerten Rückschlagorgane verhindert. Die Heizungspumpe bleibt solange abgeschaltet, bis die Brauchwassererwärmung beendet ist. d.h. bis zum Ende des Zapfvorgangs oder bis zum Erreichen einer bestimmten Temperatur des Brauchwassers. Falls das Zwischenteil durch den Erwärmungsvorgang des Brauchwassers eine zu hohe Temperatur für die Heizungsanlage aufweist, läuft die Brauchwasserpumpe solange weiter, bis die Temperatur im Zwischenstück entsprechend abgebaut ist. Erst dann schaltet der Doppelregler die Rückschlagorgane um und startet die Heizungspumpe,
während die Brauchwasserpumpe abgeschaltet wird.

Bei größerem Brauchwasserbedarf ist es vorteilhaft dem zweiten
Wärmeaustauscher einen Speicher nachzuschalten. Dafür ist eine
zusätzliche Speicherladepumpe vorgesehen, die solange Brauchwasser zwischen dem Speicher und dem zweiten Wärmeaustauscher
umwälzt, bis dieser aufgeladen ist.

Die Plattenwärmeaustauscher sind zu Reinigungszwecken zerlegbar ausgebildet. Dabei kann durch Wahl bzw. durch weiteres
Hinzufügen von Einzelplatten die Heizfläche der Wärmeaustauscher den jeweils geforderten Leistungen angepaßt werden,
so daß die Anlage weder unter- noch überdimensioniert, sondern
exakt auf die Bedürfnisse des Verbrauchers ausgelegt ist.
Durch die Anzahl der Einzelplatten kann die Heizfläche der
Wärmeaustauscher jedoch auch auf eine bestimmte Heizleistung
begrenzt werden, so daß eine eventuelle Überlastung des
Fernwärmenetzes vermieden wird.

Die sicherheitstechnische Ausrüstung der Anlage sieht vor,
daß der Sekundärkreis des ersten Wämeaustauschers einen
auf das Motorventil wirkenden Sicherheitstemperaturbegrenzer
aufweist. Dadurch ist der Heizungskreislauf abgesichert.

Für die Heizung ist ein Sicherheitstemperaturbegrenzer, vorhanden, der z.B. auf 110°C eingestellt ist; dieser wirkt
direkt auf das Stellventil auf der Primärseite. Die Maximaltemperatur - z.B. 65°C - auf der Primärseite des zweiten
Wärmeaustauschers wird vom Doppelregler begrenzt und geregelt.

Zur manuellen Steuerung, wie z.B. zum Einstellen der Anlage, sind weitere Wärmefühler und Meßöffnungen zur Indikation von Druck und Temperatur im Zwischenteil vorhanden.

Weitere Einzelheiten und Vorteile der Erfindung ergeben sich aus der nachfolgenden Beschreibung, in der ein Ausführungsbeispiel der Erfindung unter Bezugnahme auf die Zeichnung im einzelnen erläutert ist. Dabei zeigen:

Figur 1  eine schematische Darstellung der Anlage und

Figur 2  ein prinzipielles Schaltschema der Anlage gemäß Fig.1.

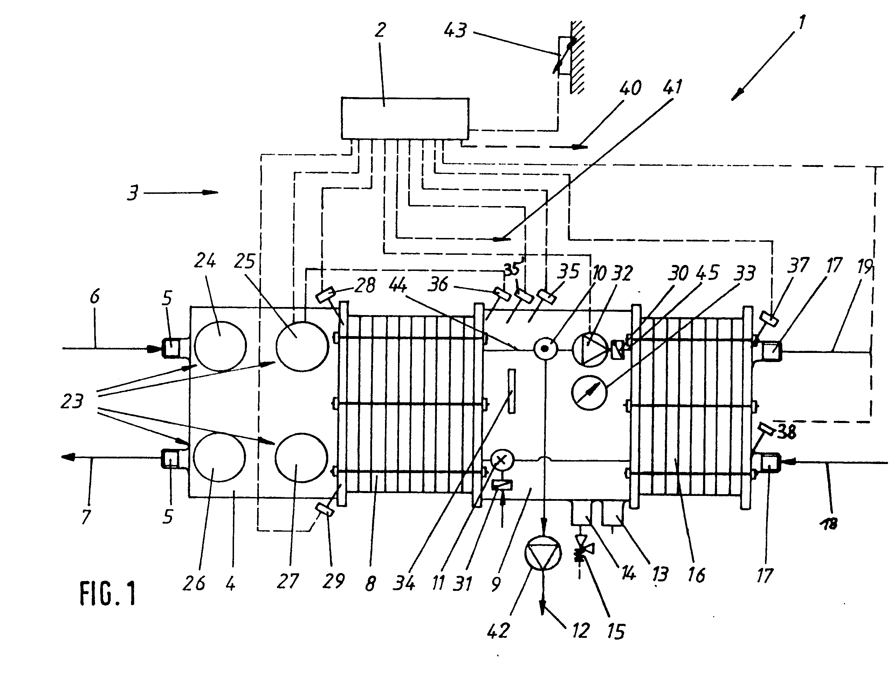

Eine erfindungsgemäße, heizungstechnische Anlage 1 (Figur 1) mit einer Steuer- und Regeleinheit 2 und Verbindungsleitungen 3 weist weiterhin an ihrem Primärblock 4 Schraubanschlüsse 5 auf, mit denen sie an den Vorlauf 6 und Rücklauf 7 des Fernleitungsnetzes angeschlossen ist. An den Primärblock 4 ist der erste Wärmeaustauscher 8, der hier als Plattenwärmeaustauscher dargestellt ist, über Flanschverbindungen angeschlossen. An den Wärmeaustauscher 8 ist ein Zwischenteil 9 angeflanscht, das Anschlüsse 10, 11 für den Heizungskreislauf 12 aufweist. Zudem sind noch weitere Anschlüsse 13, 14 für ein Ausdehnungsgefäß und ein Sicherheitsventil 15 vorgesehen. An das Zwischenteil 9 ist der zweite Wärmeaustauscher 16 angeflanscht, der ebenfalls als Plattenwärmeaustauscher ausgebildet ist. Dieser weist Schraubanschlüsse 17 auf, mit denen die Brauchwasserleitungen des Kaltwassers 18 bzw. des Warmwassers 19 verbunden sind. Das Warmwasser 19 wird in einen Speicher geführt.

Figur 1 zeigt weiterhin die Steuer- und Regelorgane der
einzelnen Komponenten der Anlage 1. Der Primärblock 4,
der vorteilhaft als Gußteil ausgebildet ist, weist die
Überwachungseinheiten für das Fernwärmemedium auf, die
zum Messen und Regeln des Druckes, der Temperatur, des
Durchflußstroms oder dgl. dienen. Unmittelbar nach dem
Schraubanschluß 5 des Vorlaufs 6 des Fernleitungsnetzes
ist eine Filtereinheit 24 vorgesehen, die als Schmutzfänger
für das Heizmedium ausgebildet ist. Daran schließt sich
ein einziges Motorstellventil 25 für die Heizungsregelung und die Brauchwassertemperaturregelung an. Unmittelbar vor dem Schraubanschluß 5 des Rücklaufs 7 des Fernleitungsnetzes befindet sich ein Wärmemengenmeßsystem 26,
das z. B. nach dem Ultraschallmeßprinzip arbeitet. Unmittelbar davor ist ein Differenzdruck- und Volumenstromregler 27 angeordnet. Zudem weist der Primärblock 4
weitere Öffnungen zum Messen von Drücken und Temperaturen
auf, in denen z. B. Temperaturmeßfühler 28, 29 für den
Vorlauf 6 bzw. den Rücklauf 7 des Fernleitungsnetzes
angeordnet sind.

Die vom Fernleitungsnetz abgegebene Wärmemenge wird
über die Heizfläche des ersten Wärmeaustauschers 8 auf
dessen Sekundärkreis 44 übertragen. Dieser wird als
Heizungskreislauf oder als Primärkreis 45 für den zweiten
Wärmeaustauscher 16 je nach Wärmeanforderung benutzt.
Das der Wärmeanforderung entsprechende Umstellen des
Sekundärkreises des ersten Wärmeaustauschers 8 erfolgt
über einen elektronischen Doppelregler, der Rückschlagorgane entsprechend ansteuert, so daß die Stoffströme
wunschgemäß gelenkt und ein hydraulischer Kurzschluß
vermieden wird. Neben den Rückschlagorganen 30, 31
weist das Zwischenteil 9 eine Brauchwasserpumpe 32 auf, die im Bedarfsfall das Heizmedium im Primärkreis 45 des zweiten Wärmeaustauschers 16 umwälzt. Außerdem sind in dem Zwischenstück 9 Meßöffnungen für eine Druckanzeige 33 und eine Temperaturanzeige 34 vorgesehen. Zudem sind mehrere Temperaturfühler 35 vorgesehen, die zur Regelung und / oder Überwachung der Temperaturen innerhalb des Zwischenteils 9 dienen. Ein Sicherheitstemperaturbegrenzer 36 ist zur Absicherung der Anlage 1 vorgesehen und wirkt direkt auf das Motorstellventil 25 ein, falls eine einstellbare Grenztemperatur überschritten wird. Weiterhin kann das Zwischenteil 9 einen Temperaturwächter (nicht dargestellt) aufweisen, der wie der Sicherheitstemperaturbegrenzer 36 dafür sorgt, daß die Temperatur des Primärkreises 44 des zweiten Wärmeaustauschers 16, eine bestimmte Temperatur, z.B. 110$^\circ$C für die Heizungsanlage nicht überschreitet. Ein Temperaturwächter 35' wirkt über den Doppelregler auf das primärseitige Motorventil ein und begrenzt die Temperatur z.B. auf 65$^\circ$C, damit Kalkausfällung verhindert wird.

Der zweite Wärmeaustauscher 16 weist am Schraubanschluß 17 für die Brauchwasser-leitung des Warmwassers 19 einen Temperaturfühler 37 für das Brauchwasser auf. Die Ansteuerung des die beiden Rückschlagorgane 30,31 betätigenden Doppelreglers erfolgt z.B. über einen Strömungsschalter 38 in der Gebäudeversorgungsleitung einem Temperaturfühler 37 im Brauchwasserspeicher oder einen Differenzdruckschalter (nicht dargestellt).

Die Temperaturfühler 28,29,35,37 der Strömungsschalter 38, die Brauchwasserpumpe 32 und das Motorstellventil 25 sind mit der Steuer- und Regeleinheit 2 über Verbindungsleitungen verbunden, wobei die Steuer- und Regeleinheit 2 weitere Anschlüsse 40,41 für eine Speicherladepumpe und eine außerhalb der Anlage 1 angeordnete Heizungspumpe 42 aufweist. Zudem ist die Steuer- und Regeleinheit 2 mit einem an einer geeigneten Stelle der Gebäudeaußenwand angebrachten Witterungsfühler 43 verbunden.

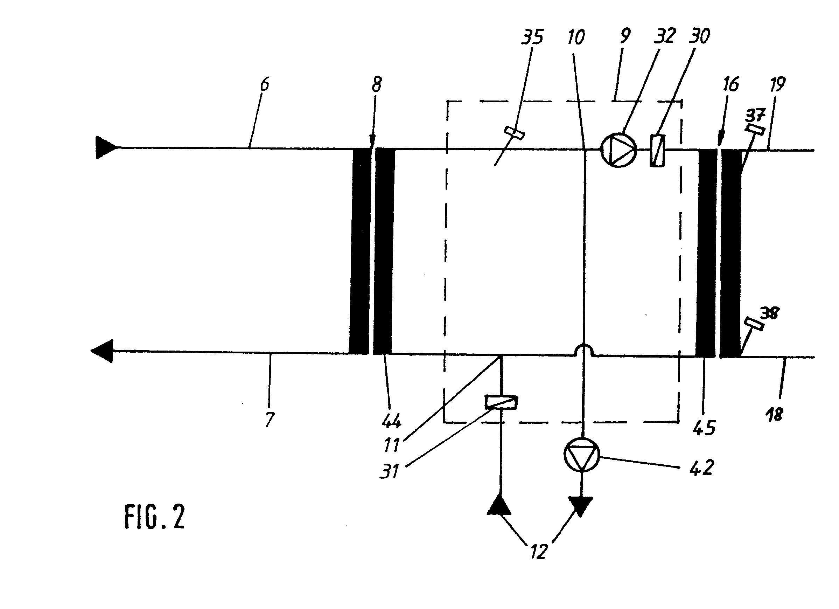

Figur 2 zeigt die schaltungstechnische Einrichtung der Anlage 1 anhand der die Umschaltung des Sekundärkreises 44 für die Heizung bzw. die Erwärmung des Brauchwassers näher erläutert werden soll.

Die Pumpen werden vom Regler geschaltet. Die Rückschlagventile wirken automatisch, zwangsgesteuert. Dabei ist die Brauchwasserpumpe 32 abgeschaltet, wohingegen die Heizungspumpe 42 das Medium im Heizungskreislauf 12 umwälzt. Die Umschaltung des Sekundärkreises 44 auf den Primärkreis 45 des Wärmetauschers 16 erfolgt dann, wenn z.B. der Strömungsschalter 38, der Temperaturfühler 37, ein Differenzdruckschalter (nicht dargestellt) oder dgl. anspricht. Ein an den elektronischen Doppelregler weitergegebenes Signal bewirkt, daß das Rückschlagorgan 30 öffnet und das Rückschlagorgan 31 im Heizungskreislauf schließt. Dabei wird gleichzeitig die Brauchwasserpumpe 32 eingeschaltet und die Heizungspumpe 42 abgeschaltet. Dieser Schaltungszustand dauert solange, bis entweder der Zapfvorgang beendet ist, d. h. der Strömungsschalter 38 ein entsprechendes Signal gibt oder der Temperaturfühler 37 ein entsprechendes Signal abgibt. Es kann jedoch auch vorgesehen sein, daß die Brauchwasserpumpe 32 eine zeitlang nachläuft, um eine eventuell zu hohe Temperatur im Zwischenteil 9 abzubauen. Dabei läuft ebenfalls eine Speicherladepumpe weiter, so daß über den Wärmeaustauscher 16 dem Zwischenteil 9 die überschüssige Wärmemenge entzogen wird. Bei Erreichen der gewünschten Temperatur im Zwischenteil 9, die z. B. über einen der Temperaturfühler 35 gemessen werden kann, schaltet er die Pumpe 32 ab und die Heizungspumpe 42 an.

5. Anlage nach einem der Ansprüche 1 bis 4, dadurch gekennzeichnet, daß das Zwischenteil (9) und der Primärblock (4) an die Wärmeaustauscher (8,16) anschraub- bzw. anflanschbar sind, daß die Flansche am Zwischenteil bereits ein Bestandteil des Plattenwärmeaustauschers sind.

6. Anlage nach einem der Ansprüche 1 bis 5, dadurch gekennzeichnet, daß der Primärblock (4) das Motorstellventil (25) aufweist, das sowohl zur Regelung der Heizungs- als auch zur Regelung der Brauchwassertemperatur dient.

7. Anlage nach einem der Ansprüche 1 bis 6, dadurch gekennzeichnet, daß der Sekundärkreis (44) des ersten Wärmeaustauschers (8) über einen Doppelregler zum Heizungskreislauf (12) bzw. zum Primärkreis (45) des zweiten Wärmeaustauschers (16) umschaltbar ist und durch ein Steuerelement, wie z.B. Strömungswächter (38), Differenzdruckschalter, Temperaturschalter (3) oder dgl. angesteuert wird.

8. Anlage nach einem der Ansprüche 1 bis 7, dadurch gekennzeichnet, daß eine Brauchwasserpumpe (32) zur Umwälzung des Primärkreises (45) des zweiten Wärmeaustauschers (16) während der Brauchwassererwärmung vorgesehen ist und daß über im Zwischenteil eingebaute (integrierte) Rückschlagorgane die Heizmittelströme eindeutig gelenkt sind und durch das Abschalten der Heizungsumwälzpumpe die Boilervorrangschaltung gegeben ist. Ein zusätzliches Umschaltventil "Heizungs-Brauchwasserbetrieb" entfällt damit.

IWK Regler und Kompensatoren GmbH
D-7513 Stutensee

Patentansprüche

1. Heizungstechnische Anlage für ein Gebäude oder einen Gebäudekomplex zur Versorgung der Heizung und des Brauchwassers mit Fernwärme gekennzeichnet durch zwei hintereinander geschaltete Wärmeaustauscher (8,16) mit einem dazwischen liegenden Zwischenteil (9), wobei der Sekundärkreis (44) des ersten Wärmeaustauschers (8) sowohl im Heizungskreislauf (12) liegt als auch den Primärkreis (45) für den zweiten, der Brauchwassererwärmung dienenden Wärmeaustauscher (16) bildet.

2. Anlage nach Anspruch 1, dadurch gekennzeichnet, daß das Zwischenteil (9) alle Meß-, Steuer- und Regelorgane für die Heiz- und Brauchwassertemperaturregelung in sich aufnimmt.

3. Anlage nach Anspruch 1 oder 2, dadurch gekennzeichnet, daß dem ersten Wärmeaustauscher (8) ein an das Fernleitungsnetz (6,7) angeschlossener Primärblock (4) vorgeschaltet ist, und der Primärblock (4) alle den Fernleitungsnetz zugeordneten Meß-, Steuer-, Überwachungs- und Regelorgane der Anlage in sich aufnimmt.

4. Anlage nach einem der Ansprüche 1 bis 3, dadurch gekennzeichnet, daß das Zwischenteil (9) und der Primärblock je aus einem Gußteil mit gegossenen Kanälen als hydraulische Wege bestehen.

al

FIG.1

7884/85

FIG. 2